# EUROPÄISCHE PATENTANMELDUNG

(11) **EP 4 160 875 A1**
(43) Veröffentlichungstag der Anmeldung: **05.04.2023**
(21) Anmeldenummer: 21200537.5
(22) Anmeldetag: 01.10.2021
(51) Int. Cl.: H02K 3/12, H02K 15/00

(54) **FORMLEITER FÜR EINE WICKLUNG EINES AKTIVTEILS EINER ROTIERENDEN ELEKTRISCHEN MASCHINE, AKTIVTEIL FÜR EINE ROTIERENDE ELEKTRISCHE MASCHINE UND ZUGEHÖRIGES HERSTELLUNGSVERFAHREN**

(71) Anmelder: Valeo eAutomotive Germany GmbH, 91056 Erlangen (DE)
(72) Erfinder: FINGER-ALBERT, Christian, 97616 Bad Neustadt a.d.Saale (DE); DOTZ, Boris, 97616 Bad Neustadt a.d.Saale (DE); BEETZ, Sebastian, 97616 Bad Neustadt a.d.Saale (DE); FÖRSTER, David, 97616 Bad Neustadt a.d.Saale (DE)
(74) Vertreter: Valeo Powertrain Systems

(57) **Zusammenfassung**

Formleiter (1, 1a, 1b) für eine Wicklung eines Aktivteils (50) einer rotierenden elektrischen Maschine (101), wobei der Formleiter (1, 1a, 1b) durch einen Draht (2) ausgebildet ist und einen ersten Drahtabschnitt (3), der sich von einem freien Ende (4) des Formleiters aus längs des Drahts (2) erstreckt und am freien Ende (4) eine Endfläche (5) aufweist, und einen zweiten Drahtabschnitt (6), der sich an den ersten Drahtabschnitt (3) anschließt, sich längs des Drahts (2) erstreckt und eine Querschnittsfläche (7) aufweist, aufweist, wobei die Endfläche (5) und die Querschnittsfläche (7) jeweils einen Rand (23, 24), der aus einem ersten Hauptabschnitt (25, 29), einem dem ersten Hauptabschnitt (25, 29) gegenüberliegenden zweiten Hauptabschnitt (26, 30) und zwei die Hauptabschnitte (26, 26, 29, 30) verbindenden Übergangsabschnitten (27, 28, 31, 32) besteht, aufweisen,
dadurch gekennzeichnet, dass
der erste Drahtabschnitt (3) randseitige Ausnehmungen (33, 34) aufweist, die sich vom freien Ende (4) derart in den ersten Drahtabschnitt (3) hereinerstrecken, dass
- die Übergangsabschnitte (27, 28) der Endfläche (5) länger als die Übergangsabschnitte (31, 32) der Querschnittsfläche (7) sind,
- der zweite Hauptabschnitt (26) der Endfläche (5) kürzer als der zweite Hauptabschnitt (30) der Querschnittsfläche (7) ist und
- der zweite Hauptabschnitt (26) der Endfläche (5) kürzer als der erste Hauptabschnitt (25) der Endfläche (5) und kürzer als der erste Hauptabschnitt (29) der Querschnittsfläche (7) ist.

## Beschreibung

Die vorliegende Erfindung betrifft einen Formleiter für eine Wicklung eines Aktivteils einer rotierenden elektrischen Maschine, wobei der Formleiter durch einen Draht ausgebildet ist und einen ersten Drahtabschnitt, der sich von einem freien Ende des Formleiters aus längs des Drahts erstreckt und am freien Ende eine Endfläche aufweist, und einen zweiten Drahtabschnitt, der sich an den ersten Drahtabschnitt anschließt, sich längs des Drahts erstreckt und eine Querschnittsfläche aufweist, aufweist, wobei die Endfläche und die Querschnittsfläche jeweils einen Rand, der aus einem ersten Hauptabschnitt, einem dem ersten Hauptabschnitt gegenüberliegenden zweiten Hauptabschnitt und zwei die Hauptabschnitte verbindenden Übergangsabschnitten besteht, aufweisen.

Daneben betrifft die Erfindung einen Aktivteil für eine rotierende elektrische Maschine und ein Verfahren zur Herstellung eines Aktivteil für eine rotierende elektrische Maschine.

Die DE 11 2013 004 290 T5 offenbart eine drehende elektrische Maschine, umfassend einen Stator mit einem Statorkern und einer Statorspule, die in Schlitze des Statorkerns eingesetzt ist. Die Statorspule wird ausgebildet, in dem mehrere Segmentspulen miteinander verschweißt werden. Die Segmentspule hat an ihrem Ende einen Verbindungsabschnitt.

Die WO 2019/159737 A1 offenbart Endabschnitte von U-förmigen Leitersegmenten, die in einen Kern eingesetzt und aneinander geführt werden. Die Endabschnitte bilden eine Fläche mit einem Rand aus, der rechteckig ist.

Beim Ausbilden einer Wicklung eines Aktivteil einer rotierenden elektrischen Maschine werden üblicherweise an einer Stirnseite mehrere in einen Kern des Aktivteils eingesetzte Formleiter durch Schweißen miteinander verbunden. Dazu werden erste Drahtabschnitt der Formleiter aneinander geführt, sodass ihre Endflächen miteinander verschweißt werden können. Dabei ist es gewünscht, einen Energieeintrag in den Formleiter gering zu halten, damit insbesondere eine isolierende Oberflächenschicht des Formleiters nicht aufgeschmolzen und in ihrer Funktion beeinträchtigt wird. Ferner soll eine sorgfältige Schweißfläche mit einem geeigneten Querschnitt ausgebildet werden, wobei ein Entstehen scharfer Kanten oder Ecken im Bereich der Schweißfläche vermieden werden soll.

Erfindung liegt die Aufgabe zugrunde, eine fertigungsfreundlichere Möglichkeit zur Herstellung eines Aktivteils einer rotierenden elektrischen Maschine mit einer aus Formleitern gebildeten Wicklung anzugeben.

Diese Aufgabe wird erfindungsgemäß bei einem Formleiter der eingangs genannten Art dadurch gelöst, dass der erste Drahtabschnitt randseitige Ausnehmungen aufweist, die sich vom freien Ende derart in den ersten Drahtabschnitt hereinerstrecken, dass die Übergangsabschnitte der Endfläche länger als die Übergangsabschnitte der Querschnittsfläche sind, der zweite Hauptabschnitt der Endfläche kürzer als der zweite Hauptabschnitt der Querschnittsfläche ist und der zweite Hauptabschnitt der Endfläche kürzer als der erste Hauptabschnitt der Endfläche und kürzer als der erste Hauptabschnitt der Querschnittsfläche ist.

Der erfindungsgemäße Formleiter für eine Wicklung eines Aktivteils einer rotierenden elektrischen Maschine ist durch einen Draht ausgebildet. Der Formleiter weist einen ersten Drahtabschnitt auf. Der erste Drahtabschnitt erstreckt sich von einem freien Ende des Formleiters aus längs des Drahts. Der erste Drahtabschnitt weist am freien Ende eine Endfläche auf. Der Formleiter weist ferner einen zweiten Drahtabschnitt auf. Der zweite Drahtabschnitt schließt sich an den ersten Drahtabschnitt an. Der zweite Drahtabschnitt erstreckt sich längs des Drahts. Der zweite Drahtabschnitt weist eine Querschnittsfläche auf. Die Endfläche und die Querschnittsfläche weisen jeweils ein Rand auf. Der Rand besteht aus einem ersten Hauptabschnitt, einem zweiten Hauptabschnitt und zwei Übergangsabschnitten. Der zweite Hauptabschnitt liegt dem ersten Hauptabschnitte gegenüber. Die Übergangsabschnitte verbinden die Hauptabschnitte. Der erste Drahtabschnitt weist randseitige Ausnehmungen auf. Die Ausnehmungen erstrecken sich vom freien Ende derart in den ersten Drahtabschnitt herein, dass die Übergangsabschnitte der Endfläche länger als die Übergangsabschnitte der Querschnittsfläche sind. Die Ausnehmungen erstrecken sich ferner derart in den ersten Drahtabschnitt herein, dass der zweite Hauptabschnitt der Endfläche kürzer als der zweite Hauptabschnitt der Querschnittsfläche ist. Die Ausnehmung erstrecken sich ferner derart in den ersten Drahtabschnitt herein, dass der zweite Hauptabschnitt der Endfläche kürzer als der erste Hauptabschnitt der Endfläche und kürzer als der erste Hauptabschnitt der Querschnittsfläche ist.

Die Erfindung beruht auf der Überlegung, das freie Ende des ersten Drahtabschnitts des Formleiters durch die Ausnehmungen derart zu formen, dass der erste Drahtabschnitt möglichst keine Eckbereiche aufweist und die Endfläche möglichst an eine zu erwartende Form einer beim Verschweißen des Formleiters mit einem anderen Formleiter entstehenden Schweißperle angepasst ist. Dazu werden die Übergangsabschnitte und der zweite Hauptabschnitt der Endfläche gegenüber den entsprechenden Abschnitten der Querschnittsfläche verkürzt, sodass der zweite Hauptabschnitt der Endfläche gegenüber den ersten Hauptabschnitten der Endfläche und der Querschnittsfläche verkürzt ist.

Die durch die Ausnehmungen im Vergleich zur Querschnittsfläche entfernten Bereiche der Endfläche müssen somit vorteilhafterweise nicht mehr durch einen Laserstrahl aufgeschmolzen werden, sodass der Energieeintrag in den Formleiter verringert werden kann. Die Ausnehmungen nähern die Endfläche im Übrigen an die Form eines sich über die Endfläche erstreckenden Abschnitts einer Schweißperle an, der beim Verschweißen zweier Formleiter entsteht. Durch die Vermeidung der Eckbereiche, die auch scharfkantig sein können, wird es im Übrigen erleichtert, zusammengeschweißte Formleiter mit einer elektrisch isolierenden Oberflächenbeschichtung, beispielsweise durch Eintauchen in ein Gel, zu überziehen.

Der Draht ist vorzugsweise aus Kupfer gebildet. Die Formleiter können als mehrfach gebogener Draht, der insbesondere eine U-Form oder eine V-Form aufweist, ausgebildet sein. Bevorzugt sind die Hauptabschnitte der Querschnittsfläche gleich lang. Bevorzugt sind die Übergangsabschnitte der Querschnittsfläche gleich lang. Bevorzugt sind die Hauptabschnitte der Querschnittsfläche länger als die Übergangsabschnitte der Querschnittsfläche. Die Querschnittsfläche kann rechteckig oder abgerundet rechteckig geformt sein.

In bevorzugter Ausgestaltung erstrecken sich die Ausnehmungen derart in den ersten Drahtabschnitt hinein, dass der Rand der Endfläche im Bereich der Übergangsabschnitt, insbesondere vollständig, konvex ist. Ein konvexer Verlauf des Rand ist dabei weiter an die Form der Schweißperle angenähert. Alternativ oder zusätzlich ist der Rand der Querschnittsfläche konvex.

Es wird bei dem erfindungsgemäßen Formleiter ferner bevorzugt, dass sich die Ausnehmungen derart in den ersten Drahtabschnitt hineinerstrecken, dass die Übergangsabschnitte der Endfläche jeweils einen sich an den zweiten Hauptabschnitt anschließenden bogenförmigen Unterabschnitt ausbilden. Der bogenförmige Unterabschnitt stellt eine gute Annäherung an die Form der Schweißperle dar. Besonders bevorzugt ist der bogenförmige Unterabschnitt kreisbogenförmig.

Außerdem können die Übergangsabschnitte der Endfläche beim erfindungsgemäßen Formleiter jeweils einen geraden Unterabschnitt aufweisen und die geraden Unterabschnitte parallel zueinander verlaufen. Durch die geraden Unterabschnitte kann eine ausreichend große Schweißfläche gewährleistet werden, die zwar im Bereich der geraden Unterabschnitte nicht exakt der Form einer Schweißperle entspricht, aber immer noch eine gute Annäherung bietet. Dafür erleichtert der gerade Unterabschnitt auch die Fertigung des Formleiters, da der gerade Unterabschnitt nicht von der Ausnehmung erfasst sein muss.

Besonders bevorzugt schließt sich der gerade Unterabschnitt eines jeweiligen Übergangsabschnitts der Endfläche an den bogenförmigen Unterabschnitt an. Dabei kann der bogenförmige Unterabschnitt unter einem stumpfen Winkel, insbesondere einem Winkel von mehr als 120°, in den geraden Unterabschnitt übergehen. Alternativ oder zusätzlich kann der bogenförmige Unterabschnitt unter einem stumpfen Winkel, insbesondere einem Winkel von mehr als 120°, in den zweiten Hauptabschnitt übergehen. Die stumpfen Winkel können identisch sein.

Es kann ferner vorgesehen sein, dass ein jeweiliger Übergangsabschnitt der Endfläche einen winkligen oder bogenförmigen Übergang vom geraden Unterabschnitt in den ersten Hauptabschnitt aufweist. Dadurch kann im Bereich des Übergangs die herkömmliche Form einer abgerundeten oder gefasten Ecke in der Endfläche erzielt werden.

Besonders bevorzugt ist der bogenförmige Unterabschnitt länger als der Übergang. Mit anderen Worten weist der bogenförmige Unterabschnitt einen größeren Kurvenradius als der bogenförmige Übergang auf.

In Weiterbildung des erfindungsgemäßen Formleiters kann vorgesehen sein, dass eine Seitenfläche des Drahts, auf welcher der erste Hauptabschnitt der Querschnittsfläche liegt, glatt vom zweiten Drahtabschnitt in den ersten Drahtabschnitt übergeht und sich zur Endfläche hin glatt fortsetzt. Der erste Abschnitt kann insbesondere als Fortsetzung des zweiten Abschnitts in Richtung des freien Endes aufgefasst werden, die durch die Ausnehmungen modifiziert ist. Die Ausnehmungen lassen sich so fertigungstechnisch einfach in den Draht einschneiden.

Im Detail können die die Hauptabschnitte der Endfläche gerade und/oder parallel zueinander verlaufen. Alternativ oder zusätzlich können die Hauptabschnitte der Querschnittsfläche gerade und/oder parallel zueinander verlaufen. Es kann auch vorgesehen sein, dass ein jeweiliger der Übergangsabschnitte der Querschnittsfläche einen geraden Unterabschnitt aufweist und insbesondere einen winkligen oder bogenförmigen Übergang vom geraden Unterabschnitt in den ersten Hauptabschnitt bzw. zweiten Hauptabschnitt aufweist.

Der erfindungsgemäße Formleiter weist insbesondere ferner ein dem ersten freien Ende gegenüberliegendes zweites freies Ende auf.

Dabei kann vorgesehen sein, dass der Formleiter einen weiteren Drahtabschnitt, der sich vom ersten freien Ende wegweisend an den zweiten Drahtabschnitt anschließt, aufweist. Der weitere Drahtabschnitt kann einen geraden Drahtunterabschnitt und einen gebogenen Drahtunterabschnitt, der wenigstens zwei Biegungen aufweist und den zweiten Drahtabschnitt mit dem geraden Drahtunterabschnitt verbindet, aufweisen. Der gerade Drahtunterabschnitt ist insbesondere dazu eingerichtet, innerhalb einer Nut eines Kerns des Aktivteils zu verlaufen. Der gebogene Drahtunterabschnitt ist insbesondere dazu eingerichtet, die Endfläche derart zu positionieren, dass sie mit der Endfläche eines anderen Formleiters, der insbesondere in einer anderen Nut des oder eines Kerns des Aktivteils angeordnet ist, verschweißt werden kann.

In bevorzugter Ausgestaltung weist der Formleiter ferner einen dritten Drahtabschnitt, der sich vom zweiten freien Ende aus längs des Drahts erstreckt und am zweiten freien Ende eine Endfläche aufweist, und einen vierten Drahtabschnitt, der sich an den dritten Drahtabschnitt anschließt, sich längs des Drahts erstreckt und eine Querschnittsfläche aufweist, auf. Die Endfläche des dritten Drahtabschnitts und die Querschnittsfläche des vierten Drahtabschnitts können jeweils einen Rand, der aus einem ersten Hauptabschnitt, einem dem ersten Hauptabschnitt gegenüberliegenden zweiten Hauptabschnitt zwei die Hauptabschnitte verbindenden Übergangsabschnitten besteht, aufweisen. Vorzugsweise ist vorgesehen, dass der dritte Drahtabschnitt randseitige Ausnehmungen aufweist, die sich vom zweiten freien Ende derart in den dritten Drahtabschnitt hereinerstrecken, dass die Übergangsabschnitte der Endfläche des dritten Drahtabschnitts länger als die Übergangsabschnitte der Querschnittsfläche des vierten Drahtabschnitts sind, der zweite Hauptabschnitt der Endfläche des dritten Drahtabschnitts kürzer als der zweite Hauptabschnitt der Querschnittsfläche des vierten Drahtabschnitts ist und der zweite Hauptabschnitt der Endfläche des dritten Drahtabschnitts kürzer als der erste Hauptabschnitt der Endfläche des dritten Drahtabschnitts und kürzer als der erste Hauptabschnitt der Querschnittsfläche des vierten Drahtabschnitts ist.

Dementsprechend kann der Formleiter an seinem zweiten freien Ende analog zum ersten freien Ende ausgebildet sein. Sämtliche vorangegangenen Ausführungen zum ersten und zweiten Drahtabschnitt lassen sich auf den dritten und vierten Drahtabschnitt übertragen.

In Weiterbildung kann sich der weitere Drahtabschnitt vom zweiten freien Ende wegweisend an den vierten Drahtabschnitt anschließen und ferner einen zweiten geraden Drahtunterabschnitt, der parallel zum ersten geraden Drahtunterabschnitt verläuft, einen zweiten gebogenen Drahtunterabschnitt, der wenigsten zwei Biegungen aufweist und den vierten Drahtabschnitt mit dem zweiten geraden Drahtunterabschnitt verbindet, und einen Umlenkunterabschnitt, der den ersten geraden Drahtunterabschnitt mit dem zweiten geraden Drahtunterabschnitt verbindet und eine Umlenkung ausbildet, aufweisen. Ein solcher Formleiter kann auch als U-Pin oder Haarnadel einer Haarnadelwicklung (engl. hair pin winding) bezeichnet oder aufgefasst werden.

Alternativ ist es möglich, dass der Formleiter als I-Pin ausgebildet ist. Dazu kann der weitere Drahtabschnitt einen Anschlussunterabschnitt aufweisen, der das zweite freie Ende umfasst. Ein solcher Formleiter weist insbesondere keine Umlenkung auf.

Die ersten Hauptabschnitte der Endflächen des ersten und dritten Drahtabschnitts und/oder die Ausnehmungen im ersten und dritten Abschnitt können auf derselben Seitenfläche des Drahts liegen. Dies bietet sich insbesondere an, wenn die geraden Drahtunterabschnitte in Schichten gleicher Parität, beispielsweise bei einer Schleifenwicklung, im Kern angeordnet sind.

Die ersten Hauptabschnitte der Endflächen des ersten und dritten Drahtabschnitts und/oder die Ausnehmungen im ersten und dritten Abschnitt können auf unterschiedlichen Seitenflächen des Drahts liegen. Dies bietet sich insbesondere an, wenn die geraden Drahtunterabschnitte in Schichten ungleicher Parität, beispielsweise bei einer Wellenwicklung, im Kern angeordnet sind.

Bevorzugt weist der Formleiter eine elektrisch isolierende Oberflächenschicht auf, die das freie Ende oder ein jeweiliges freie Ende des Formleiters, insbesondere den ersten und/oder den dritten Drahtabschnitt, nicht überdeckt.

Die der Erfindung zugrundeliegende Aufgabe wird ferner gelöst durch einen Aktivteil für eine rotierende elektrische Maschine, umfassend mehrere erfindungsgemäße Formleiter und einen Kern, in den die Formleiter eingesetzt sind, wobei die Formleiter an den Endflächen derart paarweise miteinander verschweißt sind, dass sie die Wicklung zur Erzeugung eines magnetischen Felds des Aktivteils ausbilden. Der Aktivteil kann ein Stator oder ein, insbesondere fremderregter, Rotor sein.

Vorzugsweise ist der Kern aus einer Vielzahl geschichteter und/oder gegeneinander elektrisch isolierter Einzelbleche gebildet. Der Kern kann insofern auch als Blechpaket bezeichnet werden. Der Kern kann eine Stirnseite und eine der Stirnseite gegenüberliegende weitere Stirnseite aufweisen. Der Kern kann eine Vielzahl von in Umfangsrichtung angeordneten Nuten aufweisen. Die Nuten können sich von der Stirnseite zur weiteren Stirnseite erstrecken. Die Formleiter sind vorzugsweise in die Nuten eingesetzt. Insbesondere sind in jeder Nut mehrere Formleiter in radialen Schichten eingesetzt. Der erste Drahtabschnitt und/oder der zweite Drahtabschnitt und/oder der dritte Drahtabschnitt und/oder der vierte Drahtabschnitt eines jeweiligen Formleiters ragt bzw. ragen bevorzugt an der Stirnseite aus dem Kern heraus. Die Umlenkunterabschnitte ragen vorzugsweise an der weiteren Stirnseite aus dem Kern heraus. Die geraden Drahtunterabschnitte verlaufen bevorzugt innerhalb des Kerns.

Vorzugsweise umfasst das Aktivteil mehrere Isolationsmittel, die jeweils eine der Nuten auskleiden und den Formleiter in der Nut umgeben. Die Isolationsmittel können sich axial entlang der gesamt Nut erstrecken und/oder als Isolationspapier ausgebildet sein. Durch die Ausnehmungen wird vorteilhafterweise die Gefahr einer Beschädigung der Isolationsmittel beim Einsetzen der Formleiter in den Kern reduziert, was das Einsetzen erleichtert.

Die der Erfindung zugrundeliegende Aufgabe wird ferner gelöst durch eine rotierende elektrische Maschine, umfassend einen erfindungsgemäßen ersten Aktivteil und einen, insbesondere erfindungsgemäßen, zweiten Aktivteil, wobei die elektrische Maschine dazu eingerichtet ist, ein Fahrzeug anzutreiben.

Die der Erfindung zugrundeliegende Aufgabe wird ferner gelöst durch ein Verfahren zur Herstellung eines Aktivteils, insbesondere eines Stators oder eines Rotors, für eine rotierende elektrische Maschine, umfassend folgende Schritte: Bereitstellen eines Kerns für das Aktivteil; Bereitstellen mehrerer erfindungsgemäßer Formleiter; paarweises Aneinanderführen von jeweils zwei Endflächen unterschiedlicher Formleiter, sodass die zwei Endflächen eine Schweißfläche ausbilden; und Verschweißen der Schweißflächen, insbesondere mittels eines Laserstrahls.

Sämtliche Ausführung zum erfindungsgemäßen Formleiter lassen sich analog auf den erfindungsgemäße Aktivteil, die erfindungsgemäße rotierende elektrische Maschine und das erfindungsgemäße Verfahren übertragen, sodass auch mit diesen die zuvor beschriebenen Vorteile erzielt werden können.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines ersten Ausführungsbeispiels des erfindungsgemäßen Formleiters;
- Fig. 2: eine perspektivische Detailansicht des ersten freien Endes zweier Formleiter gemäß dem ersten Ausführungsbeispiel;
- Fig. 3: eine Draufsicht auf die Endflächen zweier Formleiter gemäß den ersten Ausführungsbeispiel;
- Fig. 4 u. 5: jeweils eine Seitenansicht der in Fig. 3 gezeigten Formleiter;
- Fig. 6: Prinzipskizzen weiterer Ausführungsbeispiele des erfindungsgemäßen Formleiters;
- Fig. 7 u. 8: jeweils eine Prinzipskizze eines Ausführungsbeispiel des erfindungsgemäßen Aktivteils;
- Fig. 9: eine Prinzipskizze eines Fahrzeugs mit einem Ausführungsbeispiel des erfindungsgemäßen Aktivteils.

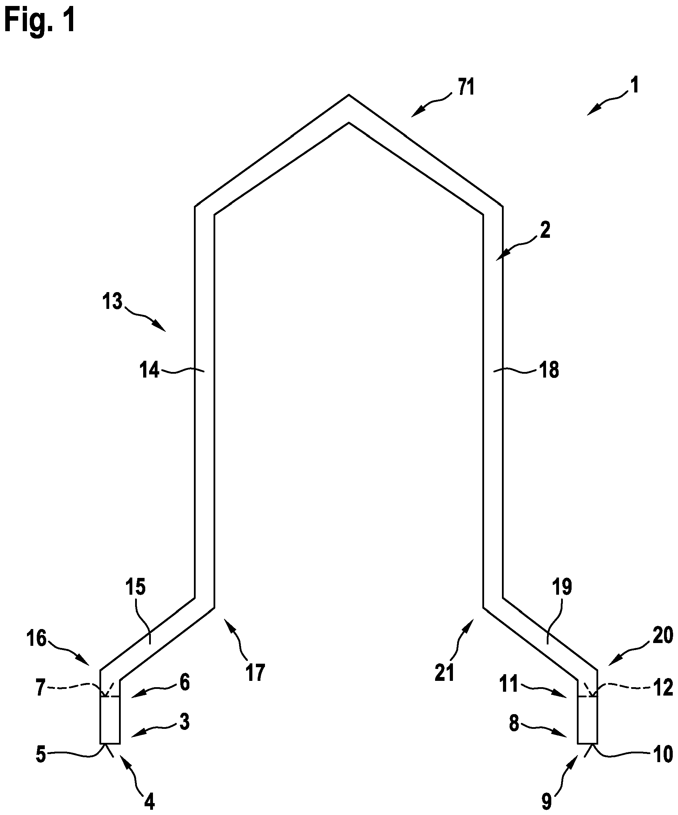

Fig. 1 ist eine Prinzipskizze eines ersten Ausführungsbeispiels eines Formleiters 1, welcher durch einen Draht 2, der exemplarisch aus Kupfer ist, ausgebildet ist.

Der Formleiter 1 weist einen ersten Drahtabschnitt 3, der sich von einem ersten freien Ende 4 des Formleiters 1 aus längs des Drahts 2 erstreckt und am freien Ende 4 eine Endfläche 5 aufweist. Daneben weist der Formleiter 1 einen zweiten Drahtabschnitt 6 auf, der sich an den ersten Drahtabschnitt 3 anschließt. Der zweite Drahtabschnitt 6 erstreckt sich längs des Drahts 2 und weist eine Querschnittsfläche 7 auf.

Gemäß dem vorliegenden Ausführungsbeispiel weist der Formleiter 1 ferner einen dritten Drahtabschnitt 8, der sich von einem dem ersten freien Ende 4 gegenüberliegenden zweiten freien Ende 9 aus längs des Drahts 2 erstreckt und am zweiten freien Ende 9 eine Endfläche 10 aufweist. Daneben weist der Formleiter 1 einen vierten Drahtabschnitt 11, der sich an den dritten Drahtabschnitt 8 anschließt, auf. Der vierte Drahtabschnitt 11 erstreckt sich längs des Drahts 2 und weist eine Querschnittsfläche 12 auf.

Außerdem ist bei diesem Ausführungsbeispiel ein weiterer Drahtabschnitt 13 vorgesehen, der sich vom ersten freien Ende 4 wegweisend an den zweiten Drahtabschnitt 6 anschließt. Der weitere Drahtabschnitt 13 weist einen ersten geraden Drahtunterabschnitt 14 und einen ersten gebogenen Drahtunterabschnitt 15 auf. Der erste gebogene Drahtunterabschnitt 15 weist zwei Biegungen 16, 17 auf und verbindet den zweiten Drahtabschnitt 6 mit dem geraden Drahtunterabschnitt 14. Zusätzlich schließt sich der weitere Drahtabschnitt 13 vom zweiten freien Ende 9 wegweisend and den vierten Drahtabschnitt 11 an. Der weitere Drahtabschnitt 13 weist ferner einen zweiten geraden Drahtunterabschnitt 18 und einen zweiten gebogenen Drahtunterabschnitt 19, der wenigstens zwei Biegungen 20, 21 aufweist und den vierten Drahtabschnitt 11 mit dem zweiten geraden Drahtunterabschnitt 18 verbindet, auf. Im vorliegenden Ausführungsbeispiel weisen die gebogenen Drahtunterabschnitte 15, 19 voneinander weg.

Ein Umlenkunterabschnitt 71 des weiteren Drahtabschnitts 13 verbindet den ersten geraden Drahtunterabschnitt 14 mit dem zweiten geraden Drahtunterabschnitt 18 und bildet eine Umlenkung um 180° aus, sodass die geraden Drahtunterabschnitte 14, 18 parallel und beabstandet zueinander verlaufen. Dazu ist der Umlenkunterabschnitt 71 mehrfach gebogen.

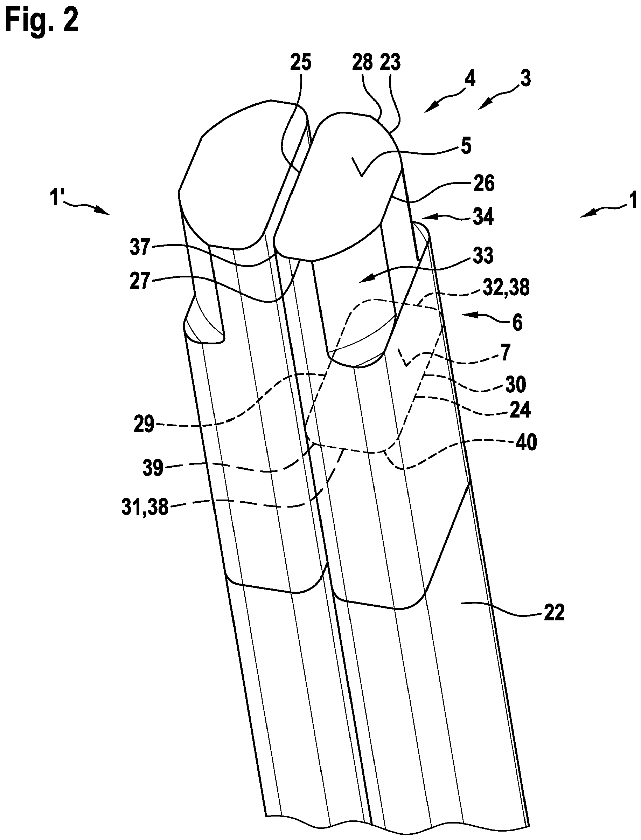

Der Formleiter 1 weist ferner abschnittsweise eine elektrisch isolierende Oberflächenschicht 22 (siehe Fig. 2, Fig. 4 und Fig. 5) auf, welche den weiteren Drahtabschnitt 13 vollständig und den zweiten Drahtabschnitt 6 und den vierten Drahtabschnitt 11 zumindest teilweise bedeckt.

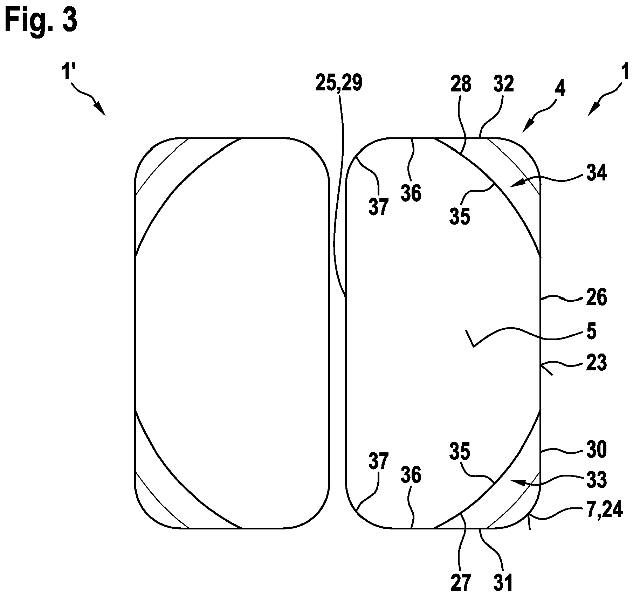

Fig. 2 und Fig. 3 zeigen jeweils das erste freie Ende 4 von zwei Formleitern 1, 1' gemäß dem ersten Ausführungsbeispiel, wobei Fig. 2 eine perspektivische Ansicht ist und Fig. 3 eine Draufsicht ist.

Die Endfläche 5 und die Querschnittsfläche 7 weisen jeweils einen Rand 23, 24 auf. Der Rand 23 der Endfläche 5 besteht aus einem ersten Hauptabschnitt 25, einem dem ersten Hauptabschnitt 25 gegenüberliegenden zweiten Hauptabschnitt 26 und zwei die Hauptabschnitte 25, 26 verbindenden Übergangsabschnitten 27, 28. Dabei verlaufen die Hauptabschnitte 25, 26 der Endfläche 5 parallel. Entsprechend besteht der Rand 24 der Querschnittsfläche 7 aus ersten Hauptabschnitt 29, einem dem ersten Hauptabschnitt 29 gegenüberliegenden zweiten Hauptabschnitt 30 und zwei die Hauptabschnitte 29, 30 verbindenden Übergangsabschnitten 31, 32. Dabei verlaufen die Hauptabschnitte 29, 30 der Querschnittsfläche 7 parallel.

Der Formleiter 1 zeichnet sich dadurch aus, dass der erste Drahtabschnitt 3 zwei randseitige Ausnehmungen 33, 34 aufweist, die sich vom freien Ende 4 derart in den ersten Drahtabschnitt 3 hereinerstrecken, dass
- die Übergangsabschnitte 27, 28 der Endfläche 5 länger als die Übergangsabschnitte 31, 32 der Querschnittsfläche 7 sind,
- der zweite Hauptabschnitt 26 der Endfläche 5 kürzer als der zweite Hauptabschnitt 30 der Querschnittsfläche 7 ist und
- der zweite Hauptabschnitt 26 der Endfläche 5 kürzer als der erste Hauptabschnitt 25 der Endfläche 5 und kürzer als der erste Hauptabschnitt 29 der Querschnittsfläche 7 ist.

Im Detail wird durch die Ausnehmungen 33, 34 ein konvexer Verlauf des Rand 23 der Endfläche 5 realisiert, bei dem die Übergangsabschnitte 27, 28 der Endfläche 5 jeweils einen sich an den zweiten Hauptabschnitt 26 anschließenden kreisbogenförmigen Unterabschnitt 35 und einen geraden Unterabschnitt 36 ausbilden. Der kreisbogenförmige Unterabschnitt 35 geht dabei unter einem stumpfen Winkel in den geraden Unterabschnitt 36 über. Ebenso geht der kreisbogenförmige Unterabschnitt 35 unter einem stumpfen Winkel in den zweiten Hauptabschnitt 26 über.

Ein jeweiliger Übergangsabschnitt 27, 28 der Endfläche 5 weist ferner einen bogenförmigen Übergang 37 vom geraden Unterabschnitt 36 in den ersten Hauptabschnitt 25 auf. Dabei ist ein Kurvenradius des kreisbogenförmigen Unterabschnitts 35 größer als jener des Übergangs 37. Anders gesprochen ist der kreisbogenförmige Unterabschnitt 35 länger als der Übergang 37. Der Übergang 37 schließt dabei tangential an den geraden Unterabschnitt 36 und den Übergang 37, sodass er die Form eines Viertelkreises aufweist.

Bei der Querschnittsfläche 7 verlaufen die Hauptabschnitte 29, 30 parallel zueinander und sind gleich lang. Die Übergangsabschnitte 31, 32 weisen jeweils einen geraden Unterabschnitt 38 auf, wobei die geraden Unterabschnitte 38 parallel zueinander verlaufen und gleich lang sind. Ein jeweiliger Übergangsabschnitt 31, 32 der Querschnittsfläche 7 weist ferner zwei bogenförmige Übergange 39, 40 an beiden Seiten des geraden Unterabschnitts 38 in die ersten Hauptabschnitte 29, 30 auf. Die Übergänge 39, 40 schließen dabei tangential an den geraden Unterabschnitt 36 und den entsprechenden Hauptabschnitt 29, 30 an, sodass die Übergänge 39, 40 die Form eines Viertelkreises aufweisen.

Wie Fig. 3 gut zu entnehmen ist, wird mithilfe die Ausnehmungen 33, 34 auf den Endflächen 5 der Formleiter 1, 1' eine Schweißfläche von im Wesentlichen kreisförmiger Gestalt mit vier abgeschnittenen Sehnen gebildet.

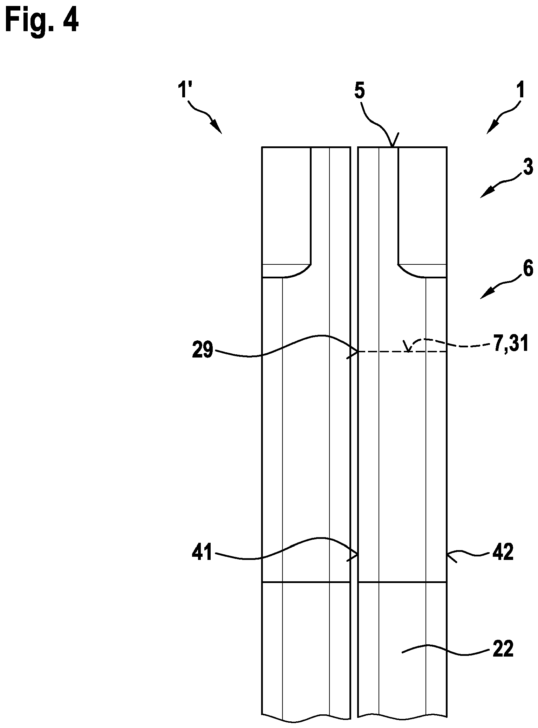

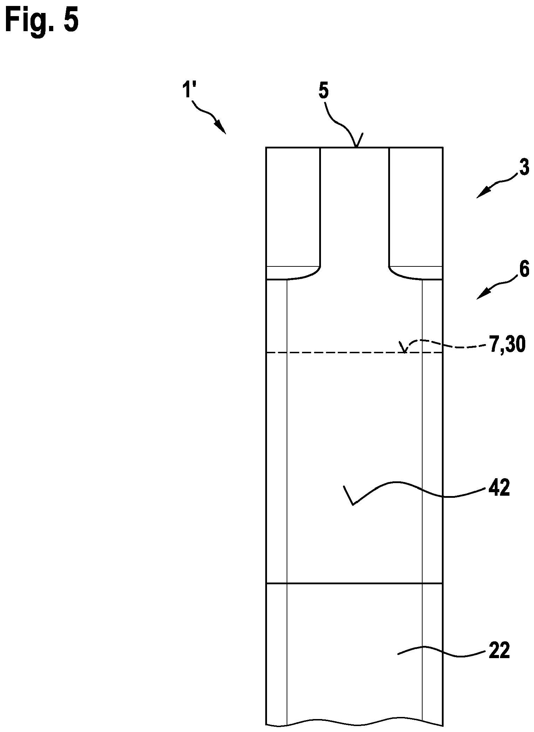

Fig. 4 und Fig. 5 sind jeweils eine Seitenansicht der Formleiter 1, 1', wobei Fig. 4 eine Seitenansicht auf den Übergangsabschnitt 31 der Querschnittsfläche 7 ist und Fig. 5 eine Seitenansicht auf den zweiten Hauptabschnitt 30 der Querschnittsfläche 7 ist.

Insbesondere in Fig. 4 ist gut ersichtlich, dass eine Seitenfläche 41 des Drahts 2, auf welcher der erste Hauptabschnitt 29 der Querschnittsfläche 7 und die Ausnehmungen 33, 34 liegen, glatt vom zweiten Drahtabschnitt 6 in den ersten Drahtabschnitt 3 übergeht und sich zur Endfläche 5 hin glatt fortsetzt.

Der dritte Drahtabschnitt 8 und der vierte Drahtabschnitt 11 sind identisch zum ersten Drahtabschnitt 3 und zum zweiten Drahtabschnitt 11 ausgebildet, sodass sich alle Ausführungen entsprechend übertragen lassen. Im vorliegenden Ausführungsbeispiel liegen die ersten Hauptabschnitte 29 der Endflächen 5 des ersten und dritten Drahtabschnitts 3, 8 auf derselben Seitenfläche 41 des Drahts 2. Alternativ liegt der erste Hauptabschnitt der Endfläche des dritten Drahtabschnitts 8 auf einer anderen Seitenfläche 42 des Drahts 2.

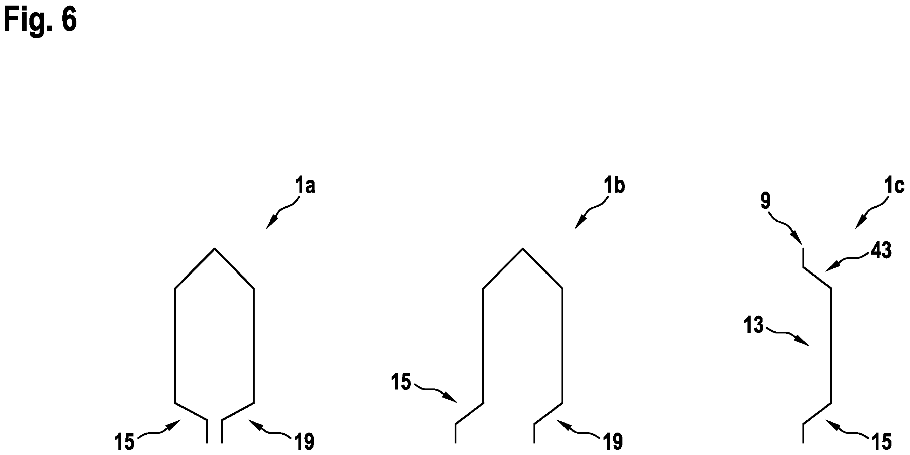

Fig. 6 zeigt Prinzipskizzen weiterer Ausführungsbeispiele des Formleiters 1a, 1b, 1c.

Beim zweiten Ausführungsbeispiel des Formleiters 1a weisen die gebogenen Drahtunterabschnitte 15, 19 aufeinander zu. Beim dritten Ausführungsbeispiel des Formleiters 1b weisen die gebogenen Drahtunterabschnitte 15, 19 in dieselbe Richtung. Die Formleiter 1, 1a, 1b können auch als U-Pins oder Haarnadeln für eine Haarnadelwicklung aufgefasst werden.

Beim vierten Ausführungsbeispiel des Formleiters 1c weist der weitere Drahtabschnitt den geraden Drahtunterabschnitt 13, den gebogenen Drahtunterabschnitt 15 und einen das zweite freie Ende 9 umfassenden Anschlussunterabschnitt 43 auf. Ein Umlenkunterabschnitt 71 ist nicht vorgesehen. Der Formleiter 1c kann auch als I-Pin für eine Haarnadelwicklung aufgefasst werden.

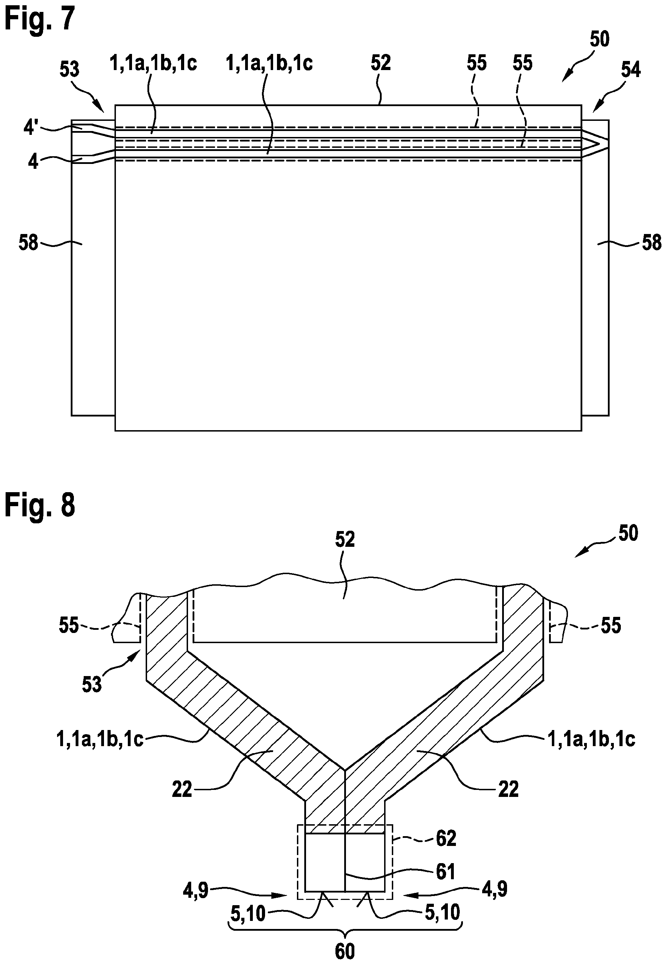

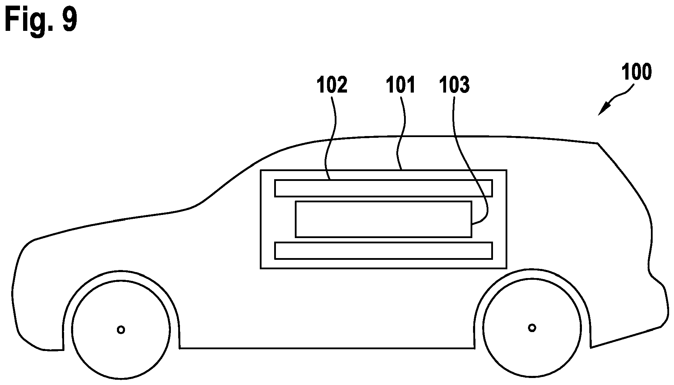

Fig. 7 ist eine Prinzipskizze eines Ausführungsbeispiels eines Aktivteils 50 für eine rotierende elektrisch Maschine 101 (vgl. Fig. 9).

Der Aktivteil 50 umfasst einen Kern 52, der in allgemein bekannter Weise aus einer Vielzahl geschichteter gegeneinander elektrisch isolierter Einzelbleche (nicht gezeigt) gebildet sein und in diesem Fall auch als Blechpaket aufgefasst werden kann. Der Kern 52 weist eine Stirnseite 53 und eine der Stirnseite 53 gegenüberliegende weitere Stirnseite 54 auf. Im Kern 52 sind ferner mehrere in Umfangsrichtung angeordnete Nuten 55 ausgebildet, die sich von der Stirnseite 53 zur weiteren Stirnseite 54 in axialer Richtung erstrecken und den Kern 52 vollständig axial durchsetzen. In Fig. 7 sind lediglich zwei der Nuten 55 rein schematisch dargestellt.

Der Aktivteil 50 umfasst ferner mehrere in den Kern 52 eingesetzte Formleiter 1, 1a, 1b, 1c gemäß einem der zuvor beschriebenen Ausführungsbeispiele. In Fig. 7 ist lediglich ein einziger Formleiter 1, 1a, 1b, 1c schematisch dargestellt. Die Formleiter 1, 1a, 1b, 1c erstrecken sich von der Stirnseite 53 zur weiteren Stirnseite 54. An beiden Stirnseiten 53, 54 bilden die Formleiter 1, 1a, 1b, 1c rein schematisch dargestellte Wickelköpfe 58 aus.

Fig. 8 ist eine Detailansicht zweier Formleiter 1, 1a, 1b, 1c im Bereich ihrer freien Enden 4, 9.

Ersichtlich ragen die Formleiter 1, 1a, 1b, 1c aus dem Kern 52 an dessen Stirnseite 53 heraus. Die freien Enden 4, 9 weisen jeweils eine Endfläche 5, 10 auf, die sich im Wesentlichen senkrecht zur Axialrichtung bzw. senkrecht zur Erstreckungsrichtung der Formleiter 1, 1a, 1b, 1c erstreckt. Zum Ausbilden eines Paares 60 sind die Endflächen 5, 10 zusammengefügt. Ein Spalt zwischen den Endflächen 5, 10 oder eine Berührung der Endflächen 5, 10 bildet dabei einen Grenzbereich 61 aus.

Jedes Paar 60 der Endflächen 9 ist mittels eines Laserstrahls miteinander verschweißt, sodass die freien Enden 5, 10 bzw. die Formleiter 1, 1a, 1b, 1c elektrisch leitfähig und mechanisch miteinander verbunden sind. Durch das Verschweißen wird oder werden ein oder mehrere Wicklungen ausgebildet, die dazu eingerichtet sind, bei einer Bestromung ein magnetisches Feld zur Erzeugung einer elektromotorischen Kraft der rotierenden elektrischen Maschine 101 (siehe Fig. 9) zu erzeugen. Der Aktivteil ist als Stator 102 oder Rotor 103 (siehe Fig. 9) ausgebildet.

Fig. 8 zeigt ferner schematisch durch eine Schraffur eine äußere elektrisch isolierende Oberflächenschicht 22 und eine Oberflächenbeschichtung 62, welche nach dem Schweißen derart auf die Formleiter 1, 1a, 1b, 1c aufgetragen worden ist, dass sie die isolierende Oberflächenschicht 22 überlappt. Die Oberflächenbeschichtung 62 wird beispielsweise durch Eintauchen der freien Enden 4, 9 in ein Tauchbad mit einem aushärtbaren Gel erzeugt.

Fig. 9 ist eine Prinzipskizze eines Fahrzeugs 100 mit einem Ausführungsbeispiel einer rotierenden elektrischen Maschine 101. Die elektrische Maschine 101 weist einen Stator 102 und einen Rotor 103 auf. Der Stator 102 und/oder der Rotor 103 sind als Aktivteil 50 gemäß einem der zuvor beschriebenen Ausführungsbeispiele ausgebildet.

Die elektrische Maschine 101 ist zum Antreiben des Fahrzeugs 100 eingerichtet. Das Fahrzeug 100 ist dementsprechend ein batterieelektrisches Fahrzeug (BEV) oder ein Hybridfahrzeug.

## Patentansprüche

1. Formleiter (1, 1a, 1b) für eine Wicklung eines Aktivteils (50) einer rotierenden elektrischen Maschine (101), wobei der Formleiter (1, 1a, 1b) durch einen Draht (2) ausgebildet ist und einen ersten Drahtabschnitt (3), der sich von einem freien Ende (4) des Formleiters aus längs des Drahts (2) erstreckt und am freien Ende (4) eine Endfläche (5) aufweist, und einen zweiten Drahtabschnitt (6), der sich an den ersten Drahtabschnitt (3) anschließt, sich längs des Drahts (2) erstreckt und eine Querschnittsfläche (7) aufweist, aufweist, wobei die Endfläche (5) und die Querschnittsfläche (7) jeweils einen Rand (23, 24), der aus einem ersten Hauptabschnitt (25, 29), einem dem ersten Hauptabschnitt (25, 29) gegenüberliegenden zweiten Hauptabschnitt (26, 30) und zwei die Hauptabschnitte (26, 26, 29, 30) verbindenden Übergangsabschnitten (27, 28, 31, 32) besteht, aufweisen, **dadurch gekennzeichnet, dass**
der erste Drahtabschnitt (3) randseitige Ausnehmungen (33, 34) aufweist, die sich vom freien Ende (4) derart in den ersten Drahtabschnitt (3) hereinerstrecken, dass
- die Übergangsabschnitte (27, 28) der Endfläche (5) länger als die Übergangsabschnitte (31, 32) der Querschnittsfläche (7) sind,
- der zweite Hauptabschnitt (26) der Endfläche (5) kürzer als der zweite Hauptabschnitt (30) der Querschnittsfläche (7) ist und
- der zweite Hauptabschnitt (26) der Endfläche (5) kürzer als der erste Hauptabschnitt (25) der Endfläche (5) und kürzer als der erste Hauptabschnitt (29) der Querschnittsfläche (7) ist.

2. Formleiter nach Anspruch 1, wobei
sich die Ausnehmungen (33, 34) derart in den ersten Drahtabschnitt (3) hineinerstrecken, dass die Übergangsabschnitte (27, 28) der Endfläche (5) jeweils einen sich an den zweiten Hauptabschnitt (26) anschließenden bogenförmigen, insbesondere kreisbogenförmigen, Unterabschnitt (35) ausbilden.

3. Formleiter nach Anspruch 1 oder 2, wobei
die Übergangsabschnitte (27, 28) der Endfläche (5) jeweils einen geraden Unterabschnitt (36) aufweisen und die geraden Unterabschnitte (36) parallel zueinander verlaufen.

4. Formleiter nach den Ansprüchen 2 und 3, wobei
sich der gerade Unterabschnitt (36) eines jeweiligen Übergangsabschnitts (27, 28) der Endfläche (5) an den bogenförmigen Unterabschnitt (35) anschließt.

5. Formleiter nach Anspruch 4, wobei
der bogenförmige Unterabschnitt (35) unter einem stumpfen Winkel in den geraden Unterabschnitt (36) übergeht und/oder unter einem stumpfen Winkel in den zweiten Hauptabschnitt (26) übergeht.

6. Formleiter nach einem der Ansprüche 3 bis 5, wobei
ein jeweiliger Übergangsabschnitt (27, 28) der Endfläche (5) einen winkligen oder bogenförmigen Übergang (37) vom geraden Unterabschnitt (36) in den ersten Hauptabschnitt (25) aufweist.

7. Formleiter nach Anspruch 6, wenn abhängig von Anspruch 4,
wobei der bogenförmige Unterabschnitt (35) länger als der Übergang (37) ist.

8. Formleiter nach einem der vorhergehenden Ansprüche, wobei
- eine Seitenfläche (41) des Drahts (2), auf welcher der erste Hauptabschnitt (29) der Querschnittsfläche (7) liegt, glatt vom zweiten Drahtabschnitt (6) in den ersten Drahtabschnitt (3) übergeht und sich zur Endfläche (5) hin glatt fortsetzt und/oder
- die Hauptabschnitte (25, 26) der Endfläche (5) gerade und/oder parallel zueinander verlaufen und/oder
- die Hauptabschnitte (29, 30) der Querschnittsfläche (7) gerade und/oder parallel zueinander verlaufen und/oder
- ein jeweiliger die Übergangsabschnitte (31, 32) der Querschnittsfläche (7) einen geraden Unterabschnitt (38) aufweist und insbesondere einen winkligen oder bogenförmigen Übergang (39, 40) vom geraden Unterabschnitt (38) in den ersten Hauptabschnitt (29) aufweist.

9. Formleiter nach einem der vorhergehenden Ansprüche, ferner aufweisend ein dem ersten freien Ende (4) gegenüberliegendes zweites freies Ende (9).

10. Formleiter nach Anspruch 9, ferner aufweisend
einen weiteren Drahtabschnitt (13), der sich vom ersten freien Ende (4) wegweisend an den zweiten Drahtabschnitt (6) anschließt und
- einen geraden Drahtunterabschnitt (14) und
- einen gebogenen Drahtunterabschnitt (15), der wenigstens zwei Biegungen (16, 17) aufweist und den zweiten Drahtabschnitt (6) mit dem geraden Drahtunterabschnitt (14) verbindet,
aufweist.

11. Formleiter nach Anspruch 10, ferner aufweisend
einen dritten Drahtabschnitt (8), der sich vom zweiten freien Ende (9) aus längs des Drahts (2) erstreckt und am zweiten freien Ende (9) eine Endfläche (10) aufweist, und einen vierten Drahtabschnitt (11), der sich an den dritten Drahtabschnitt (8) anschließt, sich längs des Drahts (2) erstreckt und eine Querschnittsfläche (12) aufweist, wobei die Endfläche (10) des dritten Drahtabschnitts (8) und die Querschnittsfläche (12) des vierten Drahtabschnitts (11) jeweils einen Rand, der aus einem ersten Hauptabschnitt, einem dem ersten Hauptabschnitt gegenüberliegenden zweiten Hauptabschnitt zwei die Hauptabschnitte verbindenden Übergangsabschnitten besteht, aufweisen, wobei der dritte Drahtabschnitt (8) randseitige Ausnehmungen aufweist, die sich vom zweiten freien Ende (9) derart in den dritten Drahtabschnitt (8) hereinerstrecken, dass
- die Übergangsabschnitte der Endfläche des dritten Drahtabschnitts (8) Iänger als die Übergangsabschnitte der Querschnittsfläche des vierten Drahtabschnitts (11) sind,
- der zweite Hauptabschnitt der Endfläche des dritten Drahtabschnitts (8) kürzer als der zweite Hauptabschnitt der Querschnittsfläche des vierten Drahtabschnitts (11) ist und
- der zweite Hauptabschnitt der Endfläche des dritten Drahtabschnitts (8) kürzer als der erste Hauptabschnitt der Endfläche des dritten Drahtabschnitts (8) und kürzer als der erste Hauptabschnitt der Querschnittsfläche des vierten Drahtabschnitts (11) ist.

12. Formleiter nach den Ansprüchen 10 und 11, wobei
sich der weitere Drahtabschnitt (13) vom zweiten freien Ende (9) wegweisend an den vierten Drahtabschnitt (11) anschließt und ferner
- einen zweiten geraden Drahtunterabschnitt (18), der parallel zum ersten geraden Drahtunterabschnitt (14) verläuft,
- einen zweiten gebogenen Drahtunterabschnitt (19), der wenigsten zwei Biegungen (20, 21) aufweist und den vierten Drahtabschnitt (11) mit dem zweiten geraden Drahtunterabschnitt (18) verbindet, und
- einen Umlenkunterabschnitt (71), der den ersten geraden Drahtunterabschnitt (14) mit dem zweiten geraden Drahtunterabschnitt (18) verbindet und eine Umlenkung ausbildet,
aufweist.

13. Formleiter nach Anspruch 11 oder 12, wobei
die ersten Hauptabschnitte (25) der Endflächen (5, 10) des ersten und dritten Drahtabschnitts (3, 8) auf derselben Seitenfläche (41) oder auf unterschiedlichen Seitenflächen (41, 42) des Drahtes (2) liegen.

14. Aktivteil (50), insbesondere Stator (102) oder Rotor (103), für eine rotierende elektrische Maschine (100), umfassend mehrere Formleiter (1, 1a, 1b) nach einem der vorhergehenden Ansprüche und einen Kern (52), in den die Formleiter (1, 1a, 1b) eingesetzt sind, wobei die Formleiter (1, 1a, 1b) an den Endflächen (5, 10) derart paarweise miteinander verschweißt sind, dass sie die Wicklung zur Erzeugung eines magnetischen Felds des Aktivteils (50) ausbilden.

15. Verfahren zur Herstellung eines Aktivteils (50), insbesondere eines Stators (102) oder eines Rotors (103), für eine rotierende elektrische Maschine (101), umfassend folgende Schritte:
- Bereitstellen eines Kerns (52) für das Aktivteil (50);
- Bereitstellen mehrerer Formleiter (1, 1a, 1b) nach einem der Ansprüche 1 bis 13;
- paarweises Aneinanderführen von jeweils zwei Endflächen (5, 10) unterschiedlicher Formleiter (1, 1a, 1 b), sodass die zwei Endflächen (5, 10) eine Schweißfläche ausbilden; und
- Verschweißen der Schweißflächen, insbesondere mittels eines Laserstrahls.
